# EUROPÄISCHE PATENTSCHRIFT

(11) **EP 0 380 131 B1**
(45) Veröffentlichungstag und Bekanntmachung des Hinweises auf die Patenterteilung: **25.08.1993**
(21) Anmeldenummer: 90101613.9
(22) Anmeldetag: 26.01.1990
(51) Int. Cl.: B02C 19/14

(54) **Zerkleinerungsvorrichtung für Behältnisse**
Shedding device for receptacles
Dispositif de broyage pour réservoirs

(30) Priorität: 27.01.1989 DE 3902487
(43) Veröffentlichungstag der Anmeldung: 01.08.1990
(73) Patentinhaber: FIRMA ULRICH HEIN, D-59427 Unna (DE)
(72) Erfinder: Hein, Axel, D-4750 Unna-Königsborn (DE); Hein, Michael, D-4750 Unna-Königsborn (DE)
(74) Vertreter: Betten & Resch

(56) Entgegenhaltungen:
- DE-A- 2 040 991
- DE-A- 2 736 853
- US-A- 2 185 352
- US-A- 3 587 984
- US-A- 3 655 138

## Beschreibung

Die Erfindung betrifft eine Zerkleinerungsvorrichtung für Behältnisse aller Art, insbesondere für Glasflaschen u.dgl.

Bei Abfüllbetrieben wie Brauereien, Weinkellereien, Sektherstellern, Herstellern von Limonaden, Säften, Mineralwasser u. dgl. fallen regelmäßig beispielsweise aufgrund einer Beschädigung aussortierte Flaschen an, welche zerkleinert werden müssen. Dies geschieht in der Regel dadurch, daß solche Flaschen von Hand in hierzu bereitgestellte Containerboxen geworfen werden, wobei diese Art der Entsorgung jedoch erhebliche Nachteile mit sich bringt.

Zum einen ist dieses Zertrümmern der Glasflaschen sehr lärmintensiv, zum anderen ist es auch aufgrund der entstehenden Glassplitter sehr unfallträchtig. Desweiteren ist die Zertrümmerung der Behältnisse auf diesem Wege nur unvollständig möglich, nachdem die verbleibende Scherbengröße relativ groß ist, woraus sich eine geringe Packungsdichte und somit ein relativ großes Transportvolumen für die zu entsorgenden Scherben ergibt.

Aus der US-A-2185352 ist eine Flaschenzerkleinerungsvorrichtung gemäß dem Oberbegriff des Patentanspruchs 1 bekannt. Die in den Führungsschacht eingelegten Flaschen rutschen durch den Führungsschacht hindurch, bis das Flaschenende an der Gehäusewandung anschlägt. Über einen manuell zu betätigenden Hammermechanismus wird die Flasche anschschließend zertrümmert.

Aus der US-A-3655138 it eine Flaschenzerkleinerungsvorrichtung bekannt, bei der am unteren Ende eines Führungsschachtes für das zu zerkleinernde Gut ein mit hoher Geschwindigkeit rotierendes, motorisch angetriebenes Werkzeug angeordnet ist, welches eine Vielzahl von nebeneinander angeordneten, winkelmäßig gegeneinander versetzten und unterschiedlich lang ausgebildeten Balken aufweist.

Der Erfindung liegt die Aufgabe zugrunde, eine Zerkleinerungsvorrichtung zu schaffen, durch die der entstehende Lärm reduziert, die Unfallgefahr aufgrund von Splittern beseitigt und die Transportkosten für die Entsorgung der zerkleinerten Behältnisse reduziert werden.

Diese Aufgabe wird im wesentlichen durch eine Zerkleinerungsvorrichtung gelöst mit einem im wesentlichen geschlossenen Gehäuse, mindestens einem von oberhalb des Gehäuses nach unten in das Innere des Gehäuses hineinragenden Führungsschacht für das zu zerkleinernde Behältnis, wobei der Führungsschacht eine obere Einführöffnung für das zu zerkleinernde Behältnis und eine untere Austrittsöffnung für das zerkleinerte Behältnis aufweist und wobei das untere Ende des Führungsschachts Mittel aufweist, um einen Austritt des unzerkleinernden Behältnisses nach unten aus dem Schacht zu verhindern, und mit mindestens einem im Gehäuse motorisch angetriebenen, beweglich gelagerten Werkzeug, welches durch eine entsprechende Öffnung im Führungsschacht in das Innere des Führungsschachtes eingreift und das hier gehaltene Behältnis zerkleinert, wobei das Werkzeug langgestreckt, beispielsweise in Form eines Stabes (für Glas) oder Messers (für bestimmte Kunststoffe) ausgebildet ist und in einer zur Längsrichtung des Führungsschachts im wesentlichen parallelen Ebene um eine außerhalb des Führungsschachts angeordnete Achse rotiert.

Der Zerkleinerungsmechanismus ist somit innerhalb des Gehäuses eingekapselt, so daß einerseits der Lärm nicht ungedämpft nach außen dringen kann und andererseits auch ein Herumfliegen von Splittern zuverlässig vermieden wird, wozu auch der langgestreckte Führungsschacht beiträgt. Die Zerkleinerung ist sehr viel vollständiger als im Falle des manuellen Zertrümmerns, nachdem die Bruchstücke des Behältnisses den Führungsschacht erst verlassen können, nachdem sie auf eine der effektiven Austrittsöffnung des Führungskanals entsprechende Größe zerkleinert wurden.

Das Werkzeug bzw. die Werkzeuge sind vorzugsweise an einem Werkzeugträger auswechselbar gehalten, wobei der Werkzeugträger im Gehäuse insbesondere um eine horizontale Achse drehbar gelagert ist und von einem Antriebsaggregat gegebenenfalls unter Zwischenschaltung eines Regelgetriebes motorisch antreibbar ist.

Die zu zerkleinernden Behältnisse, beispielsweise Flaschen, werden somit von oben in den Führungsschacht eingeführt, rutschen bis zum unteren Ende des Führungsschachts, wo sie durch geeignete Mittel wie Anschläge oder eine Querschnittsverengung angehalten werden, und werden anschließend durch das rotierende Werkzeug, beispielsweise in Form eines Rundstahls, welches von außen in den Führungsschacht eintritt und sich durch den Führungsschacht hindurchbewegt, zertrümmert. Die zertrümmerten Bruchstücke gelangen dann durch die untere Austrittsöffnung des Führungsschachts hindurch und können in einem geeigneten Behälter gesammelt werden.

Das Werkzeug bzw. die Werkzeuge sind im rotierenden Werkzeughalter vorzugsweise auswechselbar befestigt, so daß je nach zu verarbeitendem Material die jeweils geeigneten Werkzeuge eingesetzt werden können, also beispielsweise im Falle von Glas der oben erwähnte Rundstahl oder im Falle von wenig sprödem Kunststoff ein Messer.

In bevorzugter Weiterbildung der Erfindung ist die Drehachse des Werkzeughalters in etwa in Höhe der Austrittsöffnung des Führungsschachts und nahe dem Führungsschacht angeordnet, so daß das Werkzeug durch die hierfür vorgesehene Öffnung den Führungsschacht in etwa parallel zur Längsrichtung des Führungsschachts betritt und in etwa senkrecht hierzu verläßt. Eine solche Anordnung stellt sicher, daß das zu zerkleinernde Behältnis zunächst zwischen dem Werkzeug und der diesem gegenüberliegenden Seitenwandung des Führungsschachts zertrümmert wird und daß bei weiterer Drehung des Werkzeugs das Material sicher nach unten aus dem Führungsschacht heraus transportiert wird.

Besonders bevorzugt ist es, wenn mehrere Führungsschächte in einer Ebene nebeneinanderliegend angeordnet sind und der rotierende Werkzeughalter parallel zu dieser Ebene (insbesondere horizontal) im Gehäuse gelagert ist und mehrere, in Axialrichtung des Werkzeughalters beabstandete Werkzeuge trägt, wobei jedem Führungsschacht zumindest ein Werkzeug zugeordnet ist. Auf diese Weise werden mehrere Einheiten nebeneinander geschaltet, wodurch die Zerkleinerungsleistung entsprechend erhöht werden kann. Eine weitere Steigerung der Leistung ist vorzugsweise dadurch möglich, daß einem jedem Führungsschacht mehrere Werkzeuge zugeordnet sind, die in radialer Richtung gleichmäßig verteilt angeordnet sind. Nachdem sämtliche Werkzeuge auf einer einzigen Welle, dem Werkzeughalter, befestigt sind, ist nur ein einziger Antrieb erforderlich.

Um für den Fall mehrerer nebeneinanderliegender Führungsschächte Belastungsspitzen zu vermeiden, sind die Werkzeughalter gegeneinander in radialer Richtung vorzugsweise versetzt angeordnet, wobei beispielsweise im Falle von drei Führungsschächten die Werkzeuge bzw. Werkzeugsätze um jeweils 120° versetzt sein können.

Ergonomisch günstig ist es, wenn der mindestens eine Führungsschacht zur Vertikalen geneigt angeordnet ist, wodurch das Einführen des zu zerkleinernden Guts in die Führungsschächte erleichtert wird. Auch kann es zweckmäßig sein, die Führungsschächte hinsichtlich ihrer Neigung verstellbar auszubilden, um die Neigung an die individuellen Erfordernisse anpassen zu können.

Die Mittel, um den Austritt der unzerkleinerten Behältnisse nach unten aus dem Führungsschacht zu verhindern, können beispielsweise von geeigneten Anschlägen gebildet sein. Vorzugsweise ist hierfür jedoch am unteren Ende des Führungsschachtes eine insbesondere trichterförmige Querschnittsverengung vorgesehen. Die lichte Weite dieser Querschnittsverengung definiert gleichzeitig die maximale Größe der einzelnen Scherben. Größere Stücke verbleiben im Führungsschacht und werden beim darauffolgenden Zyklus zerkleinert.

Vorzugsweise ist vorgesehen, daß die Eintrittsöffnung eines jeden Führungsschachts mittels einer selbstschließenden Klappe o. dgl. verschließbar ist. Zum einen wird hierdurch die Lärmbelästigung weiter reduziert, zum anderen stellt eine solche selbstschließende Klappe einen zusätzlichen Schutz gegen Austreten der Splitter o. dgl. dar.

In weiterer bevorzugter Ausgestaltung der Erfindung ist der Innenquerschnitt des Führungsschachts dem Außenquerschnitt des zu zerkleinernden Behältnisses angepaßt, wobei unterschiedliche Führungsschächte gegebenenfalls unterschiedliche Innenquerschnitte aufweisen können. Die Anpassung des Innenquerschnitts des Führungsschachtes an beispielsweise den Durchmesser der zu zerkleinernden Flaschen stellt sicher, daß die zu zerkleinernden Flaschen in ihrer in den Führungsschacht eingesetzten Position beim Eintritt des Werkzeuges in den Führungsschacht nicht ausweichen können und somit zuverlässig zerkleinert werden. Die Innenquerschnitte der Führungsschächte können insbesondere kreisförmig oder auch, je nach Flaschenform, quadratisch, elyptisch o. dgl. ausgebildet sein.

Eine besonders lärmarme Zerkleinerungsvorrichtung ergibt sich dann, wenn in bevorzugter Weiterbildung der Erfindung die Führungsschächte und/oder das Gehäuse schallisoliert sind. Die Führungsschächte können zu diesem Zweck an ihren Außenwänden mit einer Gummierung versehen sein, das Gehäuse kann beispielsweise mit schallisolierenden Wänden oder geeigneten Beschichtungen versehen sein.

In weiterer Ausgestaltung der Erfindung ist das Gehäuse auf einem kastenartigen Gestell montiert, wobei das Gehäuse mit dem Inneren des kastenartigen Gestells in Verbindung steht, und innerhalb des Gestells kann ein auswechselbarer Behälter beispielsweise in Form eines Containers zur Aufnahme der zerkleinerten Behältnisse angeordnet sein. Das Gestell kann eine seitliche Befahröffnung aufweisen, die mittels Türe, Klappe, Vorhang o.dgl. verschließbar ist, und im übrigen ist das Gestell seitlich und oben geschlossen ausgebildet und gegebenenfalls durch geeignete, bekannte Maßnahmen schallisoliert, wodurch eine Belästigung durch denjenigen Lärm weitestgehend ausgeschaltet wird, der durch das Hineinfallen der zerkleinerten Behältnisse aus der eigentlichen Zerkleinerungszone in den Aufnahmebehälter entsteht, und ein zusätzlicher Splitterschutz geschaffen wird.

Die Box kann vorzugsweise mobil ausgebildet sein, also beispielsweise mit Laufrollen versehen sein, um einen Transport der erfindungsgemäßen Zerkleinerungsvorrichtung zum Einsatzort oder zwischen verschiedenen Einsatzorten zu erleichtern.

Weitere vorteilhafte Merkmale der Erfindung ergeben sich aus den Ansprüchen im Zusammenhang mit der nachfolgenden Beschreibung, in der ein bevorzugtes Ausführungsbeispiel anhand der Zeichnung näher erläutert ist. In der Zeichnung zeigen:
- Fig. 1: einen vertikalen Schnitt durch eine erfindungsgemäße Zerkleinerungsvorrichtung,
- Fig. 2: eine Schnittansicht auf die Zerkleinerungsvorrichtung gemäß Fig. 1 in Richtung des Pfeiles II,
- Fig. 3: einen Schnitt durch die Zerkleinerungsvorrichtung gemäß Fig. 2 in der Ebene III-III,
- Fig. 4: eine teilweise geschnittene Seitenansicht der erfindungsgemäßen Zerkleinerungsvorrichtung einschließlich des kastenartigen Traggestells sowie des hierin angeordneten Scherbencontainers, und
- Fig. 5: eine Draufsicht auf die Anordnung gemäß Fig. 4.

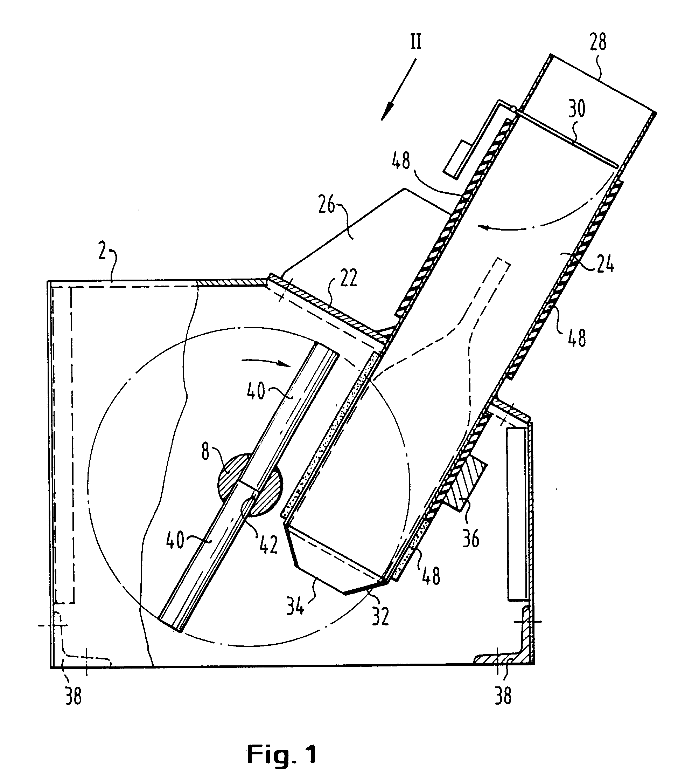

Die in den Fig. 1 bis 5 dargestellte Zerkleinerungsvorrichtung umfaßt ein Gehäuse 2, welches auf der Oberseite 4 eines kastenförmigen, insgesamt mit der Bezugsziffer 6 bezeichneten Traggestells montiert ist. Innerhalb des Gehäuses 2 ist ein als rotierende Welle ausgebildeter Werkzeughalter 8 angeordnet und in an gegenüberliegenden Seitenwänden 10, 12 befestigten Kugellagern 14, 16 drehbar gelagert. Ein Ende des wellenartigen Werkzeughalters 8 ragt seitlich aus dem Gehäuse 2 heraus und ist unter Zwischenschaltung eines Regelgetriebes 18 mit einem Antriebsmotor 20 antriebsmäßig gekoppelt. Durch das Regelgetriebe 18 kann durch Drehzahlerhöhung die Zerkleinerungsleistung variiert werden.

Im Bereich der dem Benutzer zugewandten vorderen oberen Kante des Gehäuses 2 ist dieses in der in Fig. 1 dargestellten Weise abgeschrägt und mittels eines zusätzlichen Blechs 22 verstärkt. Drei zylindrische Führungsschächte 24 sind parallel und nebeneinanderliegend angeordnet, schließen mit der Vertikalen einen Winkel von etwa 30° ein, verlaufen senkrecht zur Ebene der oben genannten Abschrägung und erstrecken sich in etwa hälftig in das Innere des Gehäuses 2 hinein und aus dem Gehäuse nach oben heraus. Zusätzliche Versteifungsrippen 26 sind zwischen dem Blech 22 und den Führungsschächten 24 vorgesehen. Die Einführöffnungen 28 der Führungsschächte 24 sind mittels selbstschließender Eingabeverschlüsse in Form von selbstschließenden Klappen 30 verschließbar, die beim Einführen des zu zerkleinernden Guts in den Führungsschacht zur Seite verschwenkt werden und anschließend aufgrund einer Rückstellkraft (z.B. Schwerkraft) selbsttätig in ihre die Eingangsöffnung verschließende Ausgangsposition zurückkehren.

Das untere Ende der Führungsschächte 24 ist jeweils mit einer sich konisch verengenden Querschnittsverengung 32 versehen, deren unterstes Ende die jeweilige Austrittsöffnung 34 des Führungsschachtes definiert. Ein Gegenhalter 36 für die Führungsschächte 24 ist an den gegenüberliegenden Seitenwänden 10, 12 des Gehäuses 2 verschweißt und dient zur Aufnahme der beim Zertrümmern der Gegenstände auftretenden hohen Kräfte, wie aus der Beschreibung weiter unten deutlich werden wird. Mit der Bezugsziffer 38 sind Grundrahmenwinkel des Gehäuses 2 bezeichnet.

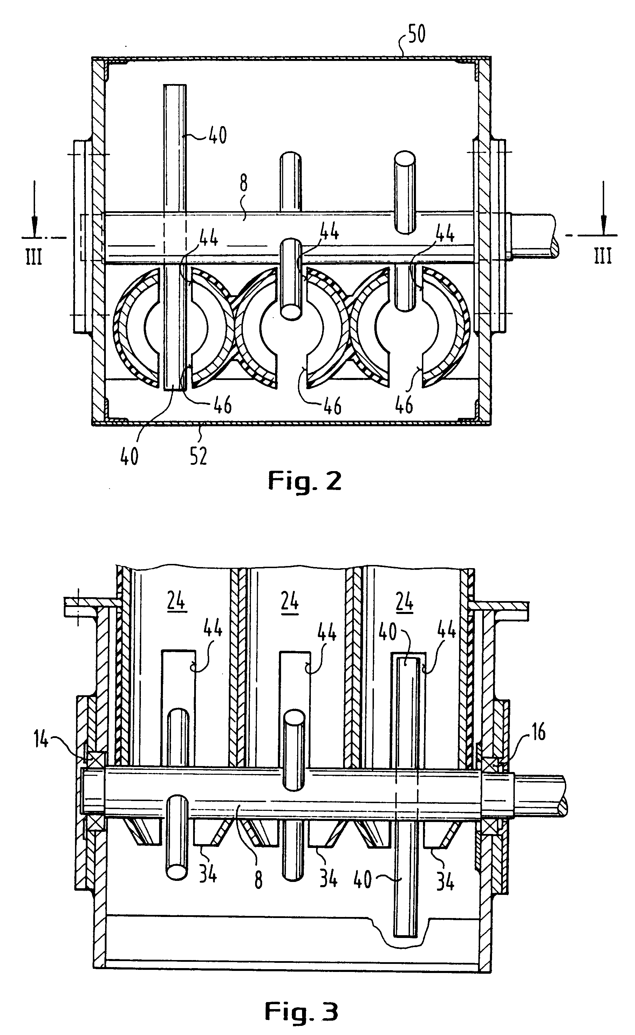

Wie insbesondere aus den Fig. 1 und 2 ersichtlich ist, verläuft der wellenartige Werkzeughalter 8 parallel zu der durch die Mittelachsen der zylindrischen Führungsschächte 24 definierten Ebene und senkrecht zur Richtung der Mittelachsen der Führungsschächte 24 und ist nahe den unteren Enden der Führungsschächte 24 angeordnet. Der Werkzeughalter 8 trägt im Falle des hier beschriebenen Ausführungsbeispiels mehrere als Rundstahl ausgebildete Werkzeuge 40, wobei einem jedem Führungsschacht 24 jeweils zwei Werkzeuge 40 zugeordnet sind. Jedes der Werkzeuge 40 verläuft radial zum Werkzeughalter 8 und ist in einer entsprechenden Bohrung 42 im Werkzeughalter 8 verankert. Die beiden, jeweils einem Führungsschacht 24 zugeordneten Werkzeuge 40 erstrekken sich in diametral entgegegesetzte Richtungen. Die Werkzeuge benachbarter Führungsschächte 24 sind jeweils um 120° versetzt angeordnet, so daß der Antrieb, gemittelt über eine vollständige Umdrehung des Werkzeughalters 8, gleichmäßig belastet wird. Die Länge eines jedes Werkzeugs 40 sollte in etwa so groß sein wie der Abstand der Achse des Werkzeughaltes 8 zu den diesem abgewandten Wandungen der Führungsschächte 24 oder etwas größer, so daß bei Rotation des Werkzeughalters jedes Werkzeug den vom Führungsschacht 24 eingeschlossenen Raum im unteren Bereich des Führungsschachts praktisch vollständig durchdringt (gesehen in der Zeichnungsebene gemäß Fig. 1).

Um ein Eindringen der Werkzeuge 40 in das Innere der Führungsschächte 24 zu ermöglichen, ist an dem dem Werkzeughalter 8 zugewandten Wandungsabschnitt eines jeden Führungsschachts 24 eine parallel zur Mittelachse des Führungsschachts verlaufende, spaltförmige Durchtrittsöffnung 44 vorgesehen, wie dies am besten aus den Fig. 2 und 3 ersichtlich ist. Gegebenenfalls sind an den gegenüberliegenden Wandungsabschnitten der Führungsschächte zusätzliche Durchtrittsöffnungen 46 ausgebildet, was von der Länge der Werkzeuge 40 abhängt.

Wird nun eine zu zerkleinernde Flasche von oben in den Führungsschacht 24 eingeführt, so rutscht diese nach unten, bis sie an der Querschnittsverengung 32 anschlägt. Der rotierende Werkzeughalter 8 führt eines der Werkzeuge 40 durch die entsprechende Durchtrittsöffnung 44 in das Innere des Führungsschachtes 24 ein, wodurch die Flasche im wesentlichen zwischen der dem Werkzeughalter 8 abgewandten Wandung des Führungsschachts und dem Werkzeug 40 zerdrückt und zertrümmert wird. Im weiteren Bewegungsablauf bewegt sich das Werkzeug 40 kreisbogenförmig in Richtung auf die Austrittsöffnung 34 zu und bewegt sich in diesem Bereich in einer Richtung in etwa parallel zur Mittelachse des Führungsschachtes. Das Material des zu zerkleinernden Gutes wird hierbei weiter zerkleinert und durch die Austrittsöffnung 34 nach außen gefördert. Noch nicht ausreichend zerkleinerte Bruchstücke der Flasche werden beim Eintritt des nächsten Werkzeuges 40 in das Innere des Führungsschachtes 24 bzw., im Falle eines einzigen Werkzeuges pro Führungsschacht, beim nächsten Eintritt dieses Werkzeugs zerkleinert und aus dem Führungsschacht 24 abgeführt.

Um die Lärmbelästigung aufgrund des Zerkleinerungsvorgangs so weit wie möglich zu reduzieren, sind die Außenflächen der Führungsschächte 24 mit einer Gummierung 48 versehen, so daß diese entdröhnt sind. Desweiteren sind auch im Falle des Gehäuses 2 Lärmschutzmaßnahmen vorgesehen, indem die Seitenwandverkleidungen 50, 52 aus schallabsorbierenden sandwichartig aufgebautem Material bestehen. Zusätzliche Schallisolierungen an geeigneten Stellen sind bei Bedarf ohne weiteres möglich.

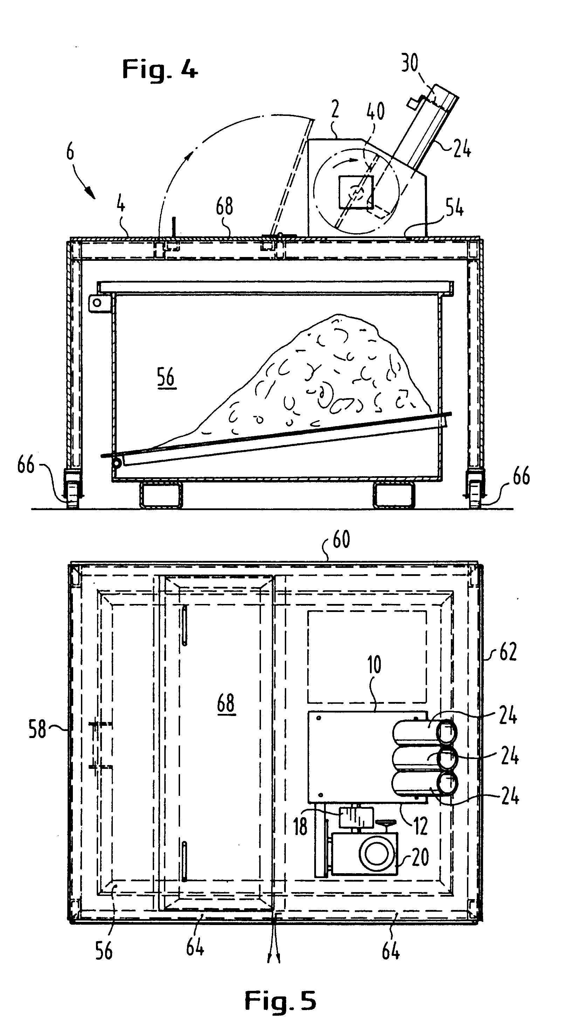

Es wird nun wieder insbesondere auf die Fig. 4 und 5 Bezug genommen. Die Oberseite 4 des kastenartigen Traggestells 6 ist im Bereich des Gehäuses 2 mit einem Durchbruch 54 versehen, über den das Gehäuse 2 mit dem Inneren des kastenartigen Traggestells 6 in Verbindung steht, so daß das aus den Führungsschächten 24 austretende zerkleinerte Material in einen innerhalb des Traggestells 6 angeordneten Scherbencontainer 56 fallen kann, in welchem es gesammelt wird, wobei bei gefülltem Scherbenkontainer dieser durch einen anderen, leeren Scherbenkontainer ausgetauscht werden kann.

Drei Seitenwände 58, 60, 62 des kastenartigen Traggestells 6 sind als feste Wände ausgebildet, während eine Seite beispielsweise mittels Türen 64 geöffnet werden kann, um Zugang zum Scherbencontainer 56 zu haben und diesen austauschen zu können. Anstelle der Türen 64 können selbstverständlich Klappen, Vorhänge o. dgl. vorgesehen sein. Die Wände des kastenartigen Traggestells 6 können zusätzlich schalltechnisch isoliert sein. Desweiteren ist das kastenartige Traggestell auf Rollen 66 gelagert, um hierdurch eine hohe Mobilität der Anlage zu gewährleisten. Die Oberseite 4 des Traggestells kann mit einem Inspektionsfenster oder einer Inspektionsklappe 68 ausgerüstet sein, damit man sich hinsichtlich des Füllungsgrads des Scherbencontainers informieren kann.

Im Falle mehrerer zu verarbeitender Flaschenformen können die Führungsschächte 24 unterschiedliche, den jeweiligen Flaschenformen angepaßte Querschnitte aufweisen. Es versteht sich, daß insbesondere auch aufgrund der konischen Querschnittsverengung 32 am unteren Ende der Führungsschächte 24 in ein und demselben Führungsschacht grundsätzlich auch unterschiedliche Flaschengrößen zerkleinert werden können.

Selbstverständlich sind diverse Abwandlungen und Ausgestaltungen der erfindungsgemäßen Zerkleinerungsvorrichtung möglich. Beispielsweise können die Führungsschächte 24 hinsichtlich ihrer Neigung verstellbar ausgebildet sein, wobei sie in diesem Fall vorzugsweise um die Achse des Werkzeughalters 8 verschwenkbar sind. Desweiteren könnten von einem Werkzeug grundsätzlich auch mehrere Führungsschächte hintereinander durchdrungen werden. Die Anzahl und Form der Führungsschächte kann den jeweiligen Anforderungen ohne weiteres angepaßt werden. An das untere Ende der Führungsschächte 24 könnte sich eine kontinuierlich arbeitende Fördereinrichtung anschließen, wobei auch eine zusätzliche Zerkleinerung des zertrümmerten Materials denkbar wäre.

### Bezugszeichenliste

- 2: Gehäuse
- 4: Oberseite
- 6: Traggestell
- 8: Werkzeughalter
- 10: Seitenwand
- 12: Seitenwand
- 14: Kugellager
- 16: Kugellager
- 18: Regelgetriebe
- 20: Antriebsmotor
- 22: zusätzliches Blech
- 24: Führungsschächte
- 26: Versteifungsrippen
- 28: Einführöffnungen
- 30: Klappen
- 32: Querschnittsverengung
- 34: Austrittsöffnung
- 36: Gegenhalter
- 38: Grundrahmenwinkel
- 40: Werkzeug
- 42: Bohrung
- 44: Durchtrittsöffnungen
- 46: Durchtrittsöffnungen
- 48: Gummierung
- 50: Seitenwandverkleidung
- 52: Seitenwandverkleidung
- 54: Durchbruch
- 56: Scherbencontainer
- 58: Seitenwand
- 60: Seitenwand
- 62: Seitenwand
- 64: Türen
- 66: Rollen
- 68: Inspektionsklappe

## Patentansprüche

1. Zerkleinerungsvorrichtung für Behältnisse wie insbesondere Flaschen aus Materialien wie insbesondere Glas oder Kunststoff, mit
einem im wesentlichen geschlossenen Gehäuse (2),
mindestens einem von oberhalb des Gehäuses (2) nach unten in das Innere des Gehäuses (2) hineinragenden Führungsschacht (24) für das zu zerkleinernde Behältnis, mit einer oberen Einführöffnung (28) für das zu zerkleinernde Behältnis und einer unteren Austrittsöffnung (34), und
mindestens einem im Gehäuse (2) beweglich gelagerten Werkzeug (40), welches durch eine entsprechende Öffnung (44) im Führungsschacht (24) in das Innere des Führungsschachtes (24) eingreift und das hier gehaltene Behältnis zerkleinert,
dadurch gekennzeichnet,
daß das untere Ende des Führungsschachtes (24) Mittel (32) aufweist, um einen Austritt des unzerkleinerten Behältnisses nach unten aus dem Führungsschacht (24) zu verhindern, und
daß das Werkzeug (40) langgestreckt ist, motorisch antreibbar ist und um eine außerhalb des Führungsschachtes (24) angeordnete Achse rotiert.

2. Zerkleinerungsvorrichtung nach Anspruch 1,
dadurch gekennzeichnet,
daß das Werkzeug (40) in einer zur Längsrichtung des Führungsschachts (24) im wesentlichen parallelen Ebene rotiert.

3. Zerkleinerungsvorrichtung nach Anspruch 1 oder 2,
dadurch gekennzeichnet,
daß das Werkzeug (40) eine Stange oder ein Messer ist.

4. Zerkleinerungsvorrichtung nach einem der vorhergehenden Ansprüche,
dadurch gekennzeichnet,
daß im Gehäuse (2) ein rotierender Werkzeughalter (4) gelagert ist, der das/die Werkzeug(e) (40) insbesondere auswechselbar trägt.

5. Zerkleinerungsvorrichtung nach Anspruch 4,
dadurch gekennzeichnet,
daß der rotierende Werkzeughalter (8) eine horizontale Drehachse aufweist.

6. Zerkleinerungsvorrichtung nach Anspruch 5,
dadurch gekennzeichnet,
daß die Drehachse des Werkzeughalters (8) in etwa in Höhe der Austrittsöffnung (34) des Führungsschachts (24) und nahe dem Führungsschacht (24) angeordnet ist, so daß das Werkzeug (40) durch die hierfür vorgesehene Öffnung (44) den Führungsschacht (24) in etwa parallel zur Längsrichtung des Führungsschachts (24) betritt und ihn etwa senkrecht hierzu verläßt.

7. Zerkleinerungsvorrichtung nach einem der vorhergehenden Ansprüche,
dadurch gekennzeichnet,
daß mehrere Führungsschächte (24) in einer Ebene nebeneinanderliegend angeordnet sind, daß ein rotierender Werkzeughalter (8) parallel zu dieser Ebene im Gehäuse (2) gelagert ist und daß der Werkzeughalter (8) mehrere, in Axialrichtung des Werkzeughalters (8) beabstandete Werkzeuge (40) trägt, wobei jedem Führungsschacht (24) zumindest ein Werkzeug (40) zugeordnet ist.

8. Zerkleinerungsvorrichtung nach Anspruch 7,
dadurch gekennzeichnet,
daß die Werkzeughalter (40) gegeneinander in radialer Richtung versetzt sind, vorzugsweise um einen Betrag von 360°/N, wobei N die Anzahl der Führungsschächte (24) ist.

9. Zerkleinerungsvorrichtung nach einem der vorhergehenden Ansprüche,
dadurch gekennzeichnet,
daß der mindestens eine Führungsschacht (24) hinsichtlich seiner Neigung verstellbar ist.

10. Zerkleinerungsvorrichtung nach einem der vorhergehenden Ansprüche,
dadurch gekennzeichnet,
daß die Mittel, um den Austritt des unzerkleinerten Behältnisses nach unten aus dem Führungsschacht (24) zu verhindern, von einer insbesondere trichterförmigen Querschnittsverengung (32) am unteren Ende des Führungsschachts (24) gebildet werden.

11. Zerkleinerungsvorrichtung nach einem der vorhergehenden Ansprüche,
dadurch gekennzeichnet,
daß die Eintrittsöffnung (28) des Führungsschachts (24) mittels einer selbstschließenden Klappe (30) o. dgl. verschließbar ist.

12. Zerkleinerungsvorrichtung nach einem der vorhergehenden Ansprüche,
dadurch gekennzeichnet,
daß der Innenquerschnitt des Führungsschachts (24) dem Außenquerschnitt des zu zerkleinernden Behältnisses angepaßt ist, wobei unterschiedliche Führungsschächte (24) ggf. unterschiedliche Innenquerschnitte aufweisen.

13. Zerkleinerungsvorrichtung nach einem der vorhergehenden Ansprüche,
dadurch gekennzeichnet,
daß die Führungsschächte (24) schallisoliert, insbesondere an ihren Außenwänden mit einer Gummierung (48) versehen sind.

14. Zerkleinerungsvorrichtung nach einem der vorhergehenden Ansprüche,
dadurch gekennzeichnet,
daß das Gehäuse (2) schallisoliert ist.

15. Zerkleinerungsvorrichtung nach einem der vorhergehenden Ansprüche,
dadurch gekennzeichnet,
daß das Gehäuse (2) auf einem - ggf. mobilen - kastenartigen Traggestell (6) montiert ist, daß das Gehäuse (2) mit dem Inneren des Traggestells (6) in Verbindung steht, und daß innerhalb des Traggestells ein auswechselbarer Behälter (56) zur Aufnahme der zerkleinerten Behältnisse angeordnet werden kann.

16. Zerkleinerungsvorrichtung nach Anspruch 15,
dadurch gekennzeichnet,
daß das kastenartige Traggestell (6) eine seitliche Befahröffnung aufweist, welche mittels Türen (64), Klappe oder Vorhang o. dgl. verschließbar ist, und daß das Traggestell (6) im übrigen seitlich und oben im wesentlichen geschlossen ausgebildet ist.

17. Zerkleinerungsvorrichtung nach Anspruch 15 oder 16,
dadurch gekennzeichnet,
daß das Traggestell (6) schallisoliert ist.

18. Zerkleinerungsvorrichtung nach einem der vorhergehenden Ansprüche,
dadurch gekennzeichnet,
daß die Zerkleinerungsleistung der Zerkleinerungsvorrichtung durch Drehzahländerung mittels eines dem Antriebsmotor (20) zugeordneten Regelgetriebes (18) variierbar ist.

## Claims

1. Crushing device for receptacles such as, in particular, bottles made of materials such as, in particular, glass or plastic, with an essentially closed housing (2), at least one guide shaft (24), which projects downwards from above the housing (2) into the interior of the housing (2), for the receptacle to be crushed, which shaft comprises a top feed opening (28) for the receptacle to be crushed and a bottom exit opening (34), and at least one tool (40), which is mounted in a mobile manner in the housing (2), penetrates into the interior of the guide shaft (24) through an appropriate opening (44) in the guide shaft (24) and crushes the receptacle held in this shaft, characterised in that the bottom end of the guide shaft (24) comprises means (32) for preventing the non-crushed receptacle from leaving the guide shaft (24) in the downward direction, and that the tool (40) is elongate, can be motor-driven and rotates about an axis disposed outside of the guide shaft (24).

2. Crushing device according to claim 1, characterised in that the tool (40) rotates in a plane which is essentially parallel to the longitudinal direction of the guide shaft (24).

3. Crushing device according to claim 1 or 2, characterised in that the tool (40) is a bar or a knife.

4. Crushing device according to one of the preceding claims, characterised in that a rotating toolholder (4), which in particular carries the tool(s) (40) such that it/they can be interchanged, is mounted in the housing (2).

5. Crushing device according to claim 4, characterised in that the rotating toolholder (8) has a horizontal axis of rotation.

6. Crushing device according to claim 5, characterised in that the axis of rotation of the toolholder (8) is disposed approximately on a level with the exit opening (34) of the guide shaft (24) and near the guide shaft (24), so that the tool (40) enters the guide shaft (24) through the opening (44) provided for this purpose approximately parallel to the longitudinal direction of the guide shaft (24) and leaves the latter approximately at a right angle to it.

7. Crushing device according to one of the preceding claims, characterised in that a plurality of guide shafts (24) are disposed next to one another in one plane, that a rotating toolholder (8) is mounted in the housing (2) parallel to this plane, and that the toolholder (8) carries a plurality of tools (40) which are spaced apart in the axial direction of the toolholder (8), at least one tool (40) being associated with each guide shaft (24).

8. Crushing device according to claim 7, characterised in that the toolholders (40) are staggered in the radial direction, preferably by a value of 360°/N, N being the number of guide shafts (24).

9. Crushing device according to one of the preceding claims, characterised in that the guide shaft (24), of which there is at least one, is adjustable in terms of its inclination.

10. Crushing device according to one of the preceding claims, characterised in that the means for preventing the non-crushed receptacle from leaving the guide shaft (24) in the downward direction are formed by a contraction in cross section (32), which is in particular in the shape of a funnel, at the bottom end of the guide shaft (24).

11. Crushing device according to one of the preceding claims, characterised in that the feed opening (28) in the guide shaft (24) can be closed by means of an automatically closing flap (30) or the like.

12. Crushing device according to one of the preceding claims, characterised in that the internal cross section of the guide shaft (24) is adapted to the external cross section of the receptacle to be crushed, with different guide shafts (24) possibly having different internal cross sections.

13. Crushing device according to one of the preceding claims, characterised in that the guide shafts (24) are soundproof and in particular provided with a rubber coating (48) on their outer walls.

14. Crushing device according to one of the preceding claims, characterised in that the housing (2) is soundproof.

15. Crushing device according to one of the preceding claims, characterised in that the housing (2) is mounted on a - possibly mobile - box-type support frame (6), that the housing (2) communicates with the interior of the support frame (6), and that an interchangeable container (56) may be disposed inside the support frame to receive the crushed receptacles.

16. Crushing device according to claim 15, characterised in that the box-type support frame (6) comprises a lateral access opening which can be closed by means of doors (64), a flap or curtain or the like, and that the rest of the support frame (6) is essentially closed at the sides and top.

17. Crushing device according to claim 15 or 16, characterised in that the support frame (6) is soundproof.

18. Crushing device according to one of the preceding claims, characterised in that the crushing power of the crushing device can be varied by varying the rotational speed by means of a variable-speed drive (18) associated with the drive motor (20).

## Revendications

1. Dispositif de broyage pour récipients tels qu'en particulier des bouteilles constituées en particulier de verre ou de matière plastique, comprenant un boîtier (2) sensiblement fermé, au moins une cheminée de guidage (24) pour le récipient à broyer qui pénètre par le haut dans le boîtier (2) et se prolonge vers le bas à l'intérieur dudit boîtier (2), un orifice d'introduction (28) supérieur pour le récipient à broyer et un orifice de sortie (34) inférieur, et au moins un outil (40) qui est monté mobile dans le boîtier (2), s'engage par une ouverture (44) correspondante dans la cheminée de guidage (24) à l'intérieur de ladite cheminée de guidage (24) et broie le récipient qui s'y trouve, caractérisé en ce que l'extrémité inférieure de la cheminée de guidage (24) présente des moyens (32) visant à empêcher le récipient non broyé de sortir de la cheminée de guidage (24) vers le bas, et que l'outil (40) est allongé, peut être entraîné par un moteur et effectue une rotation autour d'un axe disposé à l'extérieur de la cheminée de guidage (24).

2. Dispositif de broyage selon la revendication 1, **caractérisé** en ce que l'outil (40) effectue une rotation dans un plan sensiblement parallèle à la direction longitudinale de la cheminée de guidage (24).

3. Dispositif de broyage selon la revendication 1 ou 2, **caractérisé** en ce que l'outil (40) est une barre ou une lame.

4. Dispositif de broyage selon l'une des revendications précédentes, **caractérisé** en ce qu'un porte-outil (8) rotatif est monté dans le boîtier (2) et porte le/les outil(s) (40), en particulier de manière à ce qu'ils puissent être remplacés.

5. Dispositif de broyage selon la revendication 4, **caractérisé** en ce que le porte-outil (8) rotatif présente un axe de rotation horizontal.

6. Dispositif de broyage selon la revendication 5, **caractérisé** en ce que l'axe de rotation du porte-outil (8) est disposé à peu près à la hauteur de l'orifice de sortie (34) de la cheminée de guidage (24) et à proximité de la cheminée de guidage (24), si bien que l'outil (40) pénètre dans la cheminée de guidage (24) par l'ouverture (44) prévue à cet effet, à peu près parallèlement à la direction longitudinale de la cheminée de guidage (24) et la quitte à peu près perpendiculairement à ladite direction.

7. Dispositif de broyage selon l'une des revendications précédentes, **caractérisé** en ce que plusieurs cheminées de guidage (24) sont disposées les unes à côté des autres dans un plan, qu'un porte-outil (8) rotatif est monté dans le boîtier (2) parallèlement à ce plan et que le porte-outil (8) porte plusieurs outils (40) espacés dans la direction axiale du porte-outil (8), au moins un outil (40) étant associé à chaque cheminée de guidage (24).

8. Dispositif de broyage selon la revendication 7, **caractérisé** en ce que les outils (40) sont décalés les uns par rapport aux autres en direction radiale, de préférence d'un angle de 360°/N, N étant le nombre des cheminées de guidage (24).

9. Dispositif de broyage selon l'une des revendications précédentes, **caractérisé** en ce que l'inclinaison de l'une au moins des cheminées de guidage (24) est réglable.

10. Dispositif de broyage selon l'une des revendications précédentes, **caractérisé** en ce que les moyens visant à empêcher le récipient non broyé de sortir vers le bas de la cheminée de guidage (24) sont constitués par un étranglement (32) en particulier en forme d'entonnoir, situé à l'extrémité inférieure de la cheminée de guidage (24).

11. Dispositif de broyage selon l'une des revendications précédentes, **caractérisé** en ce que l'orifice d'introduction (28) de la cheminée de guidage (24) peut être fermé par une trappe (30) à fermeture automatique ou analogue.

12. Dispositif de broyage selon l'une des revendications précédentes, **caractérisé** en ce que la section transversale intérieure de la cheminée de guidage (24) est adaptée à la section transversale extérieure du récipient à broyer, des cheminées de guidage (24) différentes présentant éventuellement des sections transversales intérieures différentes.

13. Dispositif de broyage selon l'une des revendications précédentes, **caractérisé** en ce que les cheminées de broyage (24) sont insonorisées, en particulier sont munies d'un caoutchoutage (48) sur leurs parois extérieures.

14. Dispositif de broyage selon l'une des revendications précédentes, **caractérisé** en ce que le boîtier (2) est insonorisé.

15. Dispositif de broyage selon l'une des revendications précédentes, **caractérisé** en ce que le boîtier (2) est monté sur un bâti porteur (6) en forme de coffre, éventuellement mobile, que le boîtier (2) communique avec l'intérieur du bâti porteur (6) et qu'un conteneur (56) amovible destiné à recevoir les récipients broyés est disposé à l'intérieur du bâti porteur (6).

16. Dispositif de broyage selon la revendication 15, **caractérisé** en ce que le bâti porteur (6) en forme de coffre présente une ouverture latérale de visite qui peut être fermée au moyen de portes (64), d'une trappe, d'un rideau ou analogue et que le bâti porteur (6) est par ailleurs pour l'essentiel fermé sur le côté et en haut.

17. Dispositif de broyage selon la revendication 15 ou 16, **caractérisé** en ce que le bâti porteur (6) est insonorisé.

18. Dispositif de broyage selon l'une des revendications précédentes, **caractérisé** en ce qu'il est possible de faire varier la puissance de broyage du dispositif de broyage en modifiant la vitesse de rotation au moyen d'une transmission réglable (18) associée au moteur d'entraînement (20).
